(19) Europäisches Patentamt
European Patent Office
Office européen des brevets

(11) **EP 4 628 999 A1**

(12) **EUROPEAN PATENT APPLICATION**

(43) Date of publication:
**08.10.2025 Bulletin 2025/41**

(21) Application number: **24168392.9**

(22) Date of filing: **04.04.2024**

(51) International Patent Classification (IPC):
**G05B 9/02** (2006.01)   **G06F 11/14** (2006.01)

(52) Cooperative Patent Classification (CPC):
**G05B 9/02; G06F 11/1487;** G05B 19/0426

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **CODESYS Holding GmbH
87439 Kempten (DE)**

(72) Inventors:
• **Hornberger, Ingo
  87616 Marktoberdorf (DE)**

• **Haas, Maximilian
  88451 Dettingen an der Iller (DE)**
• **Taubert, Johannes
  87439 Kempten (DE)**
• **Schünemann, Ulf
  87435 Kempten (DE)**

(74) Representative: **Lucke, Andreas
Boehmert & Boehmert
Anwaltspartnerschaft mbB
Pettenkoferstrasse 22
80336 München (DE)**

(54) **TECHNIQUES FOR ESTABLISHING A VERSATILE AND SAFE INDUSTRIAL CONTROLLER SYSTEM BY MEANS OF INTERPRETERS**

(57)    An industrial controller system comprises an encoder unit adapted to receive an application code of an industrial control program and to convert the application code into a coded-processed application code; wherein the encoder unit is further adapted to receive input data for the industrial control program and to convert the input data into coded-processed input data. The industrial controller system further comprises a first interpreter unit adapted to receive the application code and the input data and to convert the application code and the input data into a first industrial control code; and a second interpreter unit adapted to receive the coded-processed application code and the coded-processed input data and to convert the coded-processed application code and the code-processed input data into a second industrial control code; and a combination unit adapted to combine the first industrial control code and the second industrial control code into a resulting industrial control code for the industrial control program.

Fig. 2

EP 4 628 999 A1

## Description

Technical Field

The present disclosure relates to the field of industrial control, and in particular to industrial controller systems for safety applications.

Background

Industrial control programs may run on industrial controller systems for real-time control of industrial processes, such as control of machinery, chemical plants or other factory environments. Industrial control programs are usually written in a high-level programming language in a programming environment. Conventionally, these programs are compiled and then stored and run on an industrial controller system that directly controls an associated machinery or industrial process. The code compilation may typically take place in the programming environment, but alternatively can also be done on the industrial controller system itself.

In many practically relevant scenarios, the operation of the machinery or industrial process is safety-critical, as its operation may potentially be harmful to the operating personnel and/or the environment. It is then advisable or even legally required to take measures that reduce the risk of a malfunction of the industrial controller system, or at least reduce the impact of such a malfunction on the controlled machinery or industrial process. Redundancy has been employed in the prior art to enhance the operational safety, such as by operating a plurality of industrial controller systems in parallel, and sending commands to the associated machinery or industrial process only if the outputs of the plurality of industrial controller systems coincide. These solutions are effective and reliable, but come with a considerable hardware overhead.

Techniques that employ software-coded processing (also called software-encoded processing) for redundantly executing native code on the same commercial off-the-shelf (COTS) hardware have been described in U. Wappler and C. Fetzer, "Software Encoded Processing: Dependable Systems with Commodity Hardware", Lecture Notes in Computer Sciences, vol. 4680, Springer, Berlin 2007, pp. 356-369, as well as in patent publications US 2013/0262938 A1 and EP 4 242 847 A2. According to these techniques, the compiled industrial control program is executed twice on the same hardware, but in two redundant software channels: (i) in a so-called native channel that typically implements the industrial control program without any additional diagnostics, and (ii) in an encoded channel that implements an encoded version of the same industrial control program together with coded processing and diagnostics to detect random failures. The coded-processed industrial control program can be generated from the native industrial control program by means of a software tool.

Summary

In view of the prior art, there remains a need to enhance the versatility and efficiency of safety control applications.

This objective is achieved with an industrial controller system according to independent claim 1 and a method of operating an industrial controller system according to independent claim 8. The dependent claims relate to optional embodiments.

In a first aspect, the disclosure relates to an industrial controller system, comprising an encoder unit adapted to receive an application code of an industrial control program and to convert the application code into a coded-processed application code; wherein the encoder unit is further adapted to receive input data for the industrial control program and to convert the input data into coded-processed input data. The industrial controller system further comprises a first interpreter unit adapted to receive the application code and the input data and to convert the application code and the input data into a first industrial control code; a second interpreter unit adapted to receive the coded-processed application code and the coded-processed input data and to convert the coded-processed application code and the coded-processed input data into a second industrial control code; and a combination unit adapted to combine the first industrial control code and the second industrial control code into a resulting industrial control code for the industrial control program.

The present disclosure may partly follow the conventional techniques of software-coded processing in industrial control applications in that it provides two redundant software channels, namely a native channel and a coded-processed channel. According to the techniques of the present disclosure, the industrial control program is interpreted (rather than compiled or merely executed) in both channels, by respective first and second interpreter units. As a result, the industrial controller system according to the present disclosure may treat the application code of the industrial control program as an input parameter or input variable, which may be provided to the industrial controller system alongside input data of the industrial control environment or controlled machinery. These techniques allow the industrial controller system to be freely programmable, in the sense that it may function with arbitrary safety applications while maintaining hardware-independence and meeting the required safety classification. This can be a significant improvement over the techniques of the prior art, in which the safety classification is specific to a particular safety application and may depend on the underlying hardware. The techniques of the present disclosure further lend themselves to an analysis of the remnant failure probability which may be independent of the safety application, and hence may simplify the safety classification.

The use of interpreters in the industrial controller system may appear counterintuitive at first sight, in particular because industrial controller systems usually need to control industrial processes or machinery in real-time, which requires a speedy execution of the industrial control program and favors compiled code. However, the inventors realized that interpreters provide sufficient speed for many real-time industrial control applications while their potential disadvantages may be overcompensated by the enhanced versatility of the techniques of the present disclosure.

According to an embodiment, the first interpreter unit is adapted to convert the application code and the input data into the first industrial control code at a runtime of the industrial control program, and/or wherein the second interpreter unit is adapted to convert the coded-processed application code and the coded-processed input data into the second industrial control code at a runtime of the industrial control program.

In particular, the first interpreter unit may be adapted to convert the application code and the input data into the first industrial control code at a runtime of the industrial control program as the industrial control program controls in real time an operation of machinery that is communicatively coupled to the industrial controller system. Real-time control may comprise a real-time conversion of the application code and/or a real-time conversion of the input data provided by the controlled machinery into the first industrial control code by means of the first interpreter unit.

Similarly, the second interpreter unit may be adapted to convert the coded-processed application code and the coded-processed input data into the second industrial control code at a runtime of the industrial control program as the industrial control program controls in real time an operation of machinery that is communicatively coupled to the industrial controller system. Real-time control may comprise a real-time conversion of the application code into the coded-processed application code, and/or a real-time conversion of the input data into the coded-processed input data. Further, real-time control may comprise a real-time conversion of the coded-processed application code and/or a real-time conversion of the coded-processed input data into the second industrial control code by means of the second interpreter unit.

Real-time control may further comprise a real-time combination of the first industrial control code and the second industrial control code into the resulting industrial control code.

According to an embodiment, the industrial controller system may not be adapted to compile the application code and/or the coded-processed application code.

In the context of the present disclosure and in the parlance of software-coded processing, the application code may sometimes be termed a "native application code", and the input data may sometimes be termed "native input data". Further, the first interpreter unit may be termed a "native interpreter unit", and the second interpreter unit may be termed a "coded-processed interpreter unit". The first industrial control code may be called a "native industrial control code", and the second industrial control code may be called a "coded-processed industrial control code".

According to an embodiment, the application code comprises instructions for running the industrial control program, in particular instructions for operating machinery adapted to be coupled to the industrial controller system.

The application code may comprise a high-level programming language or script language.

According to an embodiment, the first industrial control code and/or the second industrial control code comprises a machine code.

The first interpreter unit may be adapted to convert the application code in the high-level programming language or in the script language into the machine code of the first industrial control code.

The coded-processed application code may comprise or may be an encoded version of the application code, in particular a reversibly encoded version of the application code.

According to an embodiment, the coded-processed application code may comprise or may be an arithmetically encoded version of the application code, in particular a reversibly arithmetically encoded version of the application code.

According to an embodiment, the coded-processed application code may comprise a high-level programming language or script language.

The second interpreter unit may be adapted to convert the coded-processed application code in the high-level programming language or the script language into the machine code of the second industrial control code.

According to an embodiment, the coded-processed input data may comprise or may be an encoded version of the input data, in particular a reversibly encoded version of the input data.

In an embodiment, the coded-processed input data may comprise or may be an arithmetically encoded version of the input data, in particular a reversibly arithmetically encoded version of the input date.

According to an embodiment, the industrial controller system comprises a first data processing channel for processing the application code and the input data, and a second data processing channel for processing the coded-processed application code and the coded-processed input data.

The first data processing channel may sometimes be called a native data processing channel, whereas the second data processing channel may sometimes be called a coded-processed data processing channel.

According to an embodiment, the first interpreter unit may be located in the first data processing channel.

The second interpreter unit may be located in the second data processing channel.

According to an embodiment, the first data processing channel and the second data processing channel may revert to the same data processing resources and/or the same memory resources.

According to an embodiment, the encoder unit comprises a first encoder unit adapted to receive the application code of the industrial control program and to convert the application code into the coded-processed application code; and further comprises a second encoder unit adapted to receive the input data for the industrial control program and to convert the input data into the coded-processed input data.

The first encoder unit may be located in the first data processing channel, and the second encoder unit may be located in the second data processing channel.

According to some embodiments, the encoder unit and/or the first encoder unit and/or the second encoder unit and/or the first interpreter unit and/or the second interpreter unit and/or the combination unit are implemented at least partly in software or firmware.

According to some embodiments, the encoder unit and/or the first encoder unit and/or the second encoder unit and/or the first interpreter unit and/or the second interpreter unit and/or the combination unit are implemented at least partly in hardware.

According to some embodiments, the encoder unit and/or the first encoder unit and/or the second encoder unit and/or the first interpreter unit and/or the second interpreter unit and/or the combination unit are implemented at least partly in software or firmware, and at least partly in hardware.

According to an embodiment, the first interpreter unit and the second interpreter unit are implemented on a common hardware and/or resort to a common hardware, in particular a common central processing unit and/or a common memory unit.

Providing the first interpreter unit and the second interpreter unit on a common hardware may significantly reduce the complexity of the industrial controller system, and may lead to a particularly lean system that makes efficient use of the hardware and software resources. At the same time, processing the application code and the input data in two parallel channels in the first interpreter unit and the second interpreter unit, respectively, provides a redundancy that allows to meet stringent safety standards.

In particular, the second interpreter unit may be identical with the first interpreter unit or may coincide with the first interpreter unit.

According to an embodiment, at least two of the first interpreter unit and/or the second interpreter unit and/or the encoder unit and/or the first encoder unit and/or the second encoder unit and/or the combination unit are implemented on a common hardware and/or resort to a common hardware, in particular a common central processing unit and/or a common memory unit.

According to an embodiment, the first interpreter unit and the second interpreter unit are respectively adapted to convert the application code and the input data into the first industrial control code, and to convert the coded-processed application code and the coded-processed input data into the second industrial control code sequentially and/or cyclically.

A sequential or cyclic conversion may effectively reduce the risk that common cause failures affect both channels (native and coded-processed) at the same time.

In the context of the present disclosure, any (hardware, software or firmware) unit adapted to take the first industrial control code and the second industrial control code as inputs and yield the resulting industrial control code may be considered a combination unit that combines the first industrial control code and the second industrial control code.

According to an embodiment, the resulting industrial control code may be a function, and in particular any function of the first industrial control code and/or the second industrial control code. When the first industrial control code and/or the second industrial control code changes, the resulting industrial control code may change as well.

In some instances, the second industrial control code may coincide with the first industrial control code (assuming the ideal case of a perfect data processing without any failures), and combining the first industrial control code and the second industrial control code may comprise comparing the first industrial control code against the second industrial control code. In these instances, the resulting industrial control code may coincide with the first industrial control code and the second industrial control code.

In other instances, the second industrial control code may be at least partially different from the first industrial control code, and the resulting industrial control code may comprise at least parts of both the first industrial control code and the second industrial control code.

According to an embodiment, the combination unit may be adapted to at least partially merge the first industrial control code and the second industrial control code to generate the resulting industrial control code.

According to an embodiment, the combination unit may be adapted to output the resulting industrial control code to an industrial control network, in particular to a fieldbus network.

The industrial control network, and in particular the fieldbus network, may communicatively couple the industrial controller system to a controlled machinery for providing control commands to the controlled machinery.

According to an embodiment, the combination unit may be adapted to validate the first industrial control code and/or the second industrial control code, in particular to validate a checksum associated with the first industrial control code and/or the second industrial control code.

Validation allows to reliably detect failures in the data processing that may occur both in the native channel and in the coded-processed channel, and hence may increase the reliability of the industrial controller system in safety-critical applications.

The input data may comprise at least one parameter for running the industrial control program, in particular at least one parameter pertaining to an operation of machinery adapted to be communicatively coupled to the industrial controller system.

For instance, the input data may be data to be employed by the application code of the industrial control program when running the industrial control program.

According to an embodiment, the input data additionally or alternatively comprises data fed back from machinery adapted to be communicatively coupled to the industrial controller system.

According to an embodiment, the encoder unit, in particular the second encoder unit, may be adapted to receive the input data from an industrial control network, in particular a fieldbus network.

In a second aspect, the disclosure relates to a method of operating an industrial controller system, comprising: receiving an application code of an industrial control program; receiving input data for the industrial control program; converting the application code into a coded-processed application code; converting the input data into coded-processed input data; converting the application code and the input data into a first industrial control code by means of a first interpreter unit; converting the coded-processed application code and the coded-processed input data into a second industrial control code by means of a second interpreter unit; and combining the first industrial control code and the second industrial control code into a resulting industrial control code for the industrial control program.

According to an embodiment, the application code and the input data are converted into the first industrial control code, and the coded-processed application code and the coded-processed input data are converted into the second industrial control code sequentially and/or cyclically.

According to an embodiment, combining the first industrial control code and the second industrial control code into the resulting industrial control code may comprise comparing the first industrial control code and the second industrial control code.

According to an embodiment, combining the first industrial control code and the second industrial control code into the resulting industrial control code may comprise at least partially merging the first industrial control code and the second industrial control code.

In an embodiment, the method further comprises outputting the resulting industrial control code to an industrial control network, in particular to a fieldbus network.

According to an embodiment, the method does not comprise compiling the application code and/or the coded-processed application code.

According to an embodiment, the method further comprises validating the first industrial control code and/or the second industrial control code, in particular validating a checksum associated with the first industrial control code and/or the second industrial control code.

The input data for the industrial control program may be received from an industrial control network, in particular from a fieldbus network.

According to an embodiment, the method further comprises assessing a probability of a failure of running the industrial control program in terms of a processor clock frequency of the industrial controller system, and/or in terms of a data bus clock frequency of a data bus communicatively coupled to the industrial controller system, such as a fieldbus.

By assessing the probability of the failure of running the industrial control program in terms of a clock frequency of the processor or data bus, the safety analysis may be made irrespective and may become independent of the specific application code. As a result, the industrial controller system according to the present disclosure may lend itself to a security assessment that is general enough to encompass all application codes, or at least a large set of different application codes.

According to an embodiment, the method comprises assessing a probability of a failure of running the industrial control program only in terms of a processor clock frequency of the industrial controller system and/or in terms of a data bus clock frequency of a data bus communicatively coupled to the industrial controller system, such as a fieldbus.

In general, the steps of the method of the second aspect as described above are not limited to a certain order, but may be implemented in any feasible order.

In a third aspect, the disclosure relates to a computer program or computer program product comprising computer-readable instructions such that the instructions, when run on an industrial controller system, in particular the industrial controller system with some or all of the features described above with reference to the first aspect, implement on the industrial controller system a method with some or all of the features described above with reference to the second aspect.

Brief description of the Figures

The features and advantages of the present disclosure will become best apparent from a detailed description of embodiments with reference to the accompanying drawings, in which:

Fig. 1    illustrates an industrial control environment in which the techniques of the present disclosure may be employed;

Fig. 2    is a schematic illustration of an industrial controller system according to an embodiment;

Fig. 3    is a schematic illustration of an industrial controller system according to another embodiment;

Fig. 4    is a schematic illustration of an industrial controller system according to another embodiment;

Fig. 5    is a flow diagram illustrating a method for operating an industrial controller system according to an embodiment;

Fig. 6    is a flow diagram illustrating a method for cyclic operation of an industrial controller system according to an embodiment;

Fig. 7    is a schematic illustration of data processing in two parallel data channels by means of a first interpreter unit and a second interpreter unit according to an embodiment;

Fig. 8    is a flow diagram illustrating an operation of a combination unit according to an embodiment; and

Fig. 9    graphically illustrates techniques of assessing a failure rate according to an embodiment.

Description of Embodiments

An industrial controller system and a method of operating an industrial controller system for safety applications will now be described with reference to an exemplary industrial control environment 10 that involves control of a gantry crane 12 by means of industrial control software. However, this example is merely for illustration, and in general the techniques according to the present disclosure may be employed for the industrial control of any kind of industrial process, comprising but not limited to control of industrial machinery, robots, chemical fabrication processes, or light control applications.

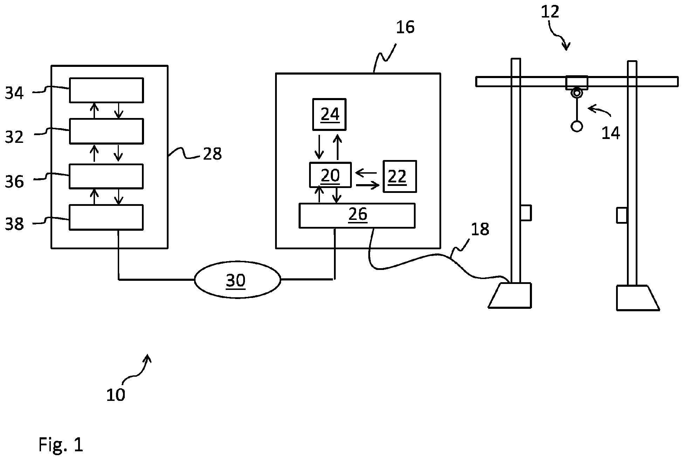

As illustrated in Figure 1, the industrial control environment 10 comprises a gantry crane 12, which may be a crane employed in a factory environment to move heavy goods in an assembly hall by means of a movable hook assembly 14.

The industrial control environment 10 further comprises an industrial controller system 16 that is connected to the gantry crane 12 by means of a control line 18, such as a wired or wireless connection. In some examples, the control line 18 may form part of an industrial control network, such as a fieldbus network.

The industrial controller system 16 may comprise at least one industrial controller unit 20, and in some embodiments a plurality of industrial controller units (not shown in Fig. 1) that may generally be similar to the industrial controller unit 20. The industrial controller unit 20 may run an industrial control program for controlling the gantry crane 12. The industrial controller system 16 may further comprise processing resources, such as at least one data processing unit 22 (such as a central processing unit, CPU), and memory resources, such as at least one data memory unit 24, to which the industrial controller unit(s) 20 may be connected and to which they may revert for running the industrial control program.

The industrial controller system 16 of Fig. 1 further comprises a communication interface 26 that is connected to the processing unit 20 and is adapted to communicate back and forth with the gantry crane 12 via the control line 18. For instance, the industrial controller unit 20 may provide instructions to the gantry crane 12 in the form of fieldbus commands that comprise both header data and payload data for the operation of actuators to move the hook assembly 14 along a predetermined path, wherein the fieldbus commands may be provided via the communication interface 26 and the control line 18. The communication interface 26 may also receive sensor signals pertaining to an operation of the gantry crane 12 via the control line 18, and may provide corresponding feedback as input data to the industrial controller unit 20. For instance, such sensor signals may be generated by sensors (not shown) indicating a position of the hook assembly 14 on the gantry crane 12.

The industrial control environment 10 may further comprise a programming system 28 that is connected to the communication interface 26 via a network 30, such as a factory intranet or the Internet. For instance, the programming system 28 may comprise a desktop PC or other computing device, and may be employed by a programmer to design and generate industrial control software for the industrial controller system 16, for instance in the form of an industrial control application in a high-level programming language, such as C or C++. For instance, the industrial control application may comply with the industry standard IEC 61131-3.

As further illustrated in Fig. 1, the programming system 28 may comprise a programming interface 32, such as a programming editor or a graphical editor that allows a programmer to generate the software code of the industrial control application in the high-level programming language. The programming system 28 may further comprise a programming memory unit 34 and a programming processor unit 36 that are connected to the programming interface 32. The programming memory unit 34 may store functions, function blocks or variables that can be employed by the programmer when generating the application code of the industrial control program. The programming processor unit 36 may provide the processing resources to run the programming interface 32 and to generate the application code of the industrial control program. The programming system 28 may provide the application code for the industrial control program, and possibly parameters for the operation of the gantry crane 12, to the industrial controller system 16 via a communication interface 38 and the network 30.

In many practically relevant scenarios, the operation of the industrial controller system 16 may involve safety issues. For instance, a malfunction of the industrial controller system 16, such as due to a calculation failure or data processing failure in the industrial controller system 16, such as when running the industrial control program, may translate into a malfunction of the gantry crane 12. As a result, the movement of the movable hook assembly 14 may pose a danger to the equipment or even to operating personnel in the vicinity of the gantry crane 12.

Hence, it is desirable that any such malfunction of the industrial controller system 16 is prevented, or at least detected, so that in case of such a malfunction the gantry crane 12 may be switched to a safe state. For instance, the technical norm ISO 61508 specifies a plurality of different Safety Integrity Levels (SIL) comprising different levels SIL1 to SIL4 of increasing safety requirements.

In the prior art, different approaches have been taken to address these safety requirements. For instance, the industrial controller system 16 may be provided with a plurality of industrial controller units 20, such as two industrial controller units that may operate in parallel and may each be provided with their own data processing unit 22 and data memory unit 24. In this way, a redundant environment can be provided in which the control commands for the gantry crane 12 are computed in parallel and independently by each of the two industrial controller units 20. In such a redundant environment, a command for operating the gantry crane 12 may be sent via the control line 18 only if the two industrial controller units 20 come to the same result. However, this kind of redundancy involves a lot of hardware overhead.

The techniques according to the present disclosure provide more efficient ways of enhancing the safety in the industrial control environment 10 while allowing a slim architecture, as will be described in further detail below.

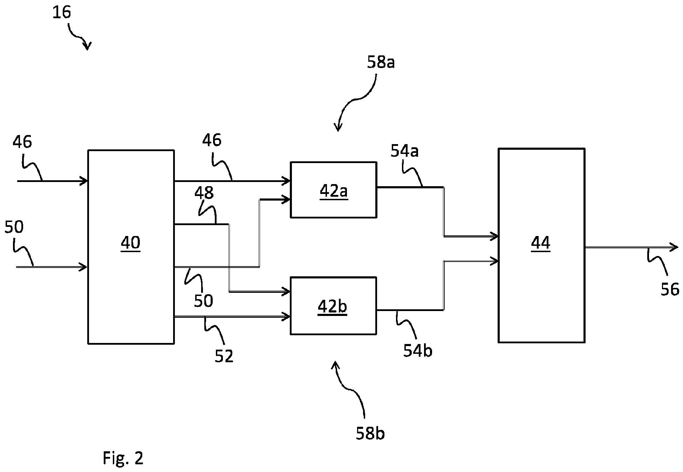

In many conventional industrial control implementations, the programming system 28 may comprise a compiler unit (not shown) that is adapted to convert the industrial control program from a high-level programming language into a compiled industrial control program in machine code. The compiled industrial control program may then be provided to the industrial controller system 16 via the network 30, and may be stored in the data memory unit 24 and may be run in the data processing unit 22 to control operation of the gantry crane 12. In other conventional industrial control environments, the programming system 28 may provide the industrial control program to the industrial controller system 16 via the network 30 in the high-level programming language, and the industrial controller system 16 may comprises a compiler unit (not shown) that compiles the high-level industrial control program into machine code. In both of these instances, the industrial controller system 16 is adapted to run compiled code, i.e., machine code at run-time, for real-time control of the gantry crane 12. Compiled code can be executed fast, which appears particularly advantageous for industrial control scenarios in which segments of code typically need to be executed a large number of times, and the code execution oftentimes cannot be stopped without hampering the operation of the controlled machinery, in this case the gantry crane 12. The techniques of the present disclosure deviate from the conventional wisdom, and rely on code interpretation (rather than code compilation) in two parallel data channels for enhanced safety and versatility, as will now be described in additional detail with reference to Figures 2 to 9.

Fig. 2 schematically illustrates an industrial controller system 16 according to an embodiment.

The industrial controller system 16 of Fig. 2 can be employed in the industrial control environment 10 described above with reference to Fig. 1, and generally comprises an encoder unit 40, a first interpreter unit 42a, a second interpreter unit 42b, and a combination unit 44.

The encoder unit 40 is adapted to receive an application code 46 of an industrial control program and to convert the application code 46 into a coded-processed application code 48. The encoder unit 40 is further adapted to receive input data 50 for the industrial control program, and to convert the input data 50 into coded-processed input data 52.

The first interpreter unit 42a is adapted to receive the application code 46 and the input data 50, and to convert the application code 46 and the input data 50 into a first industrial control code 54a.

The second interpreter unit 42b is adapted to receive the coded-processed application code 48 and the coded-processed input data 52, and is further adapted to convert the coded-processed application code 48 and the coded-processed input data 52 into a second industrial control code 54b.

The combination unit 44 is adapted to combine the first industrial control code 54a and the second industrial control code 54b into a resulting industrial control code 56 for the industrial control program.

The application code 46 may be provided to the industrial controller system 16 in the form of a high-level programming language, such as C or C++, or in the form of a script language.

The application code 46 may comprise instructions for running an industrial control program, such as instructions for operating the gantry crane 12 that is coupled to the industrial controller system 16, as described above in additional detail with reference to Fig. 1.

The input data 50 may comprise at least one parameter for running the industrial control program, in particular at least one parameter pertaining to the operation of the gantry crane 12. The parameters may comprise pre-set parameters selected by the programmer when generating the application code 46, but may also comprise operational parameters selected by the user at the time of running the industrial control program.

Alternatively or additionally, the input data 50 may comprise data fed back from machinery that is coupled to the industrial controller system 16, such as sensor data fed back to the industrial controller system from the gantry crane 12 via the fieldbus network 18, as described above with reference to Fig. 1. The fed back input data 50 allows the industrial controller system 16 to automatically take into account changes in the process parameter of the controlled machinery, such as the gantry crane 12, in a feedback loop.

The encoder unit 40 may encode both the application code 46 and the input data 50 by means of an arithmetic encoding, using conventional techniques of software-encoded processing. For instance, the encoding of input x into encoded output $x_c$ may generally take the form of a linear reversible transformation

$$x \rightarrow x_c = A\ x \tag{1}$$

for some matrix A. The encoder unit 40 yields both the coded-processed application code 48, which may again be in the format of a high-level programming language or script language, and the coded-processed input data 52.

The first interpreter unit 42a establishes a native data processing channel 58a for the native application code 46 and for the native input data 50, whereas the second interpreter unit 42b establishes a parallel coded-processed data processing channel 58b for the coded-processed application code 48 and the coded-processed input data 52.

The first interpreter unit 42a may convert the application code 46 and the input data 50 into the first industrial control code 54a at a runtime of the associated machinery for real-time control of the associated machinery, such as the gantry crane 12. Similarly, the second interpreter unit 42b may convert the coded-processed application code 48 and the coded-processed input data 52 into the second industrial control code 54b at the runtime of the associated machinery for real-time control of the associated machinery, such as the gantry crane 12. Both the first industrial control code 54a and the second industrial control code 54b may take the form of machine code, such as fieldbus commands adapted to be sent via the fieldbus network 18.

The combination unit 44 combines the first industrial control code 54a from the native data processing channel 58a with the second industrial control code 54b from the coded-processed data processing channel 58b to yield the resulting industrial control code 56, which may again take the form of machine code and may be sent to the associated machinery, such as the gantry crane 12, via the fieldbus network 18. The fieldbus 18 may be implemented as a black channel fieldbus.

Given that the industrial controller system 16 takes the application code 46 of the industrial control program as input data, it may process various different application codes, which greatly enhances its versatility. In particular, both the native data processing channel 58a and the coded-processed data processing channel 58b may lend themselves to the processing of a large set of different application codes 46.

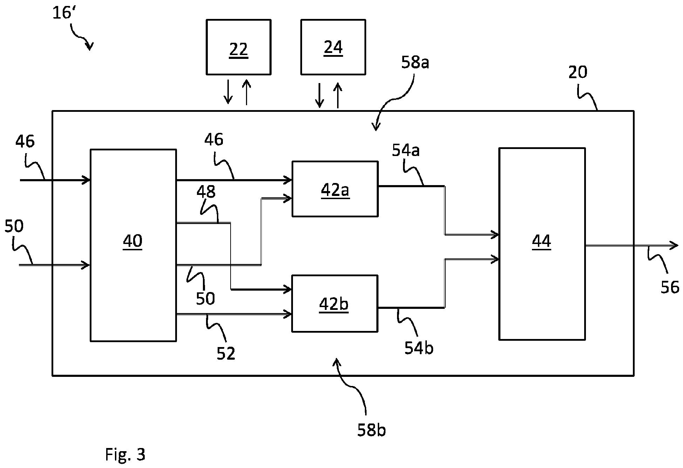

The techniques of the present disclosure allow to implement the first interpreter unit 42a and the second interpreter unit 42b, and more generally the entire native data processing channel 58a and the entire coded-processed data processing channel 58b on one and the same industrial controller unit 20 of the industrial controller system 16', making use of the same data processing unit 22, such as a central processing unit (CPU), and the same data memory unit 24, as schematically illustrated in the embodiment of Fig. 3.

In general and with further reference to Fig. 3, all of the encoder unit 40, first interpreter unit 42a, second interpreter unit 42b, and combination unit 44 may be implemented on one of the same industrial controller unit 20, making use of the same data processing unit 22 and the same data memory unit 24. This implementation is advantageous in that it reduces the hardware overhead. At the same time, the techniques of software-encoded processing provide the required redundancy to ensure compliance with safety regulations such as SIL. In particular, the data processing unit 22 and the data memory unit 24 of the industrial controller system 16' may be selected as standard off-the-shelf hardware without jeopardizing the safety requirements.

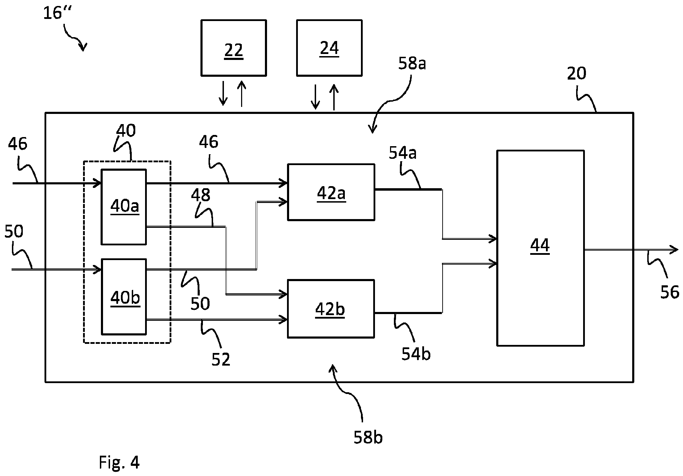

Fig. 4 is a schematic illustration of an industrial controller system 16" according to another embodiment. The industrial controller system 16" of Fig. 4 generally corresponds to the industrial controller system 16' described above with reference to Fig. 3. However, the encoder unit 40 of the industrial controller system 16" comprises a first encoder unit 40a and a second encoder unit 40b.

The first encoder unit 40a may be adapted to receive the application code 46 and to convert the application code 46 into the coded-processed application code 48. The second encoder unit 40b may be adapted to receive the input data 50 and to convert the input data 50 into the coded-processed input data 52. Hence, the configuration of Fig. 4 implements the separation between the native data processing channel 58a and the coded-processed data processing channel 58b also on the level of the encoder units 40a, 40b.

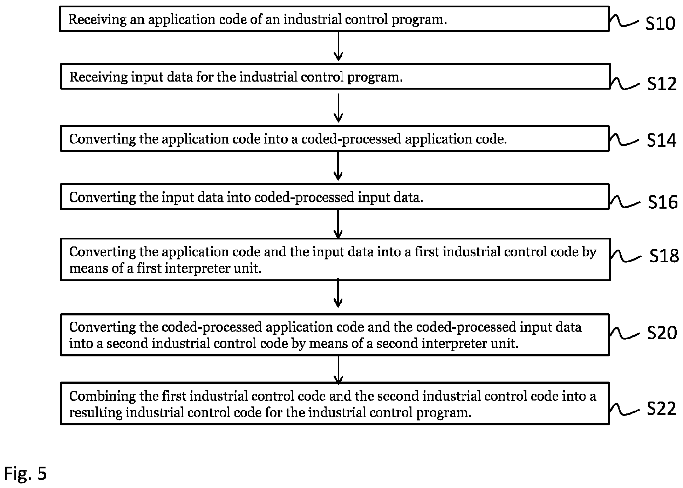

Fig. 5 is a schematic flow diagram illustrating a method of operating an industrial controller system, such as one of the industrial controller systems 16, 16', 16" described above with reference to Figures 1 to 4.

In a first step S10, an application code of an industrial control program is received, such as at the encoder unit 40.

In a second step S12, input data for the industrial control program is received, such as at the encoder unit 40. As described above with reference to Figures 1 to 4, the input data may comprise parameters for running the industrial control program and/or data fed back from machinery that is communicatively coupled to the industrial controller system 16, 16', 16", such as data fed back from the gantry crane 12.

In a third step S14, the application code is converted into a coded-processed application code, such as by the encoder unit 40.

In a fourth step S16, the input data is converted into coded-processed input data, such as by the encoder unit 40.

In a fifth step S18, the application code and the input data are converted into a first industrial control code by means of a first interpreter unit.

In a sixth step S20, the coded-processed application code and the coded-processed input data are converted into a second industrial control code by means of a second interpreter unit. The second interpreter unit may be identical with or coincide with the first interpreter unit.

In a seventh step S22, the first industrial control code and the second industrial control code are combined into a resulting industrial control code for the industrial control program, such as by means of the combination unit 44.

While the flow diagram of Fig. 5 shows the steps S10 to S22 in a certain order, this only represents one way of ordering the process steps. In general, the steps S10 to S22 may appear in any feasible order. Some of the steps S10 to S22 may also be implemented concurrently. For instance, the application code may be converted into the coded-processed application code before or after the input data is received, or at the same time. Similarly, the coded-processed application code and the coded-processed input data may be converted into the second industrial control code before or after the application code and the input data are converted into the first industrial control code, or at the same time.

In some embodiments, it may be advantageous to process the native data processing channel 58a and the coded-process data processing channel 58b sequentially, so to avoid that common cause failures that may appear in the data processing unit 22 and/or in the data memory unit 24 may affect both channels.

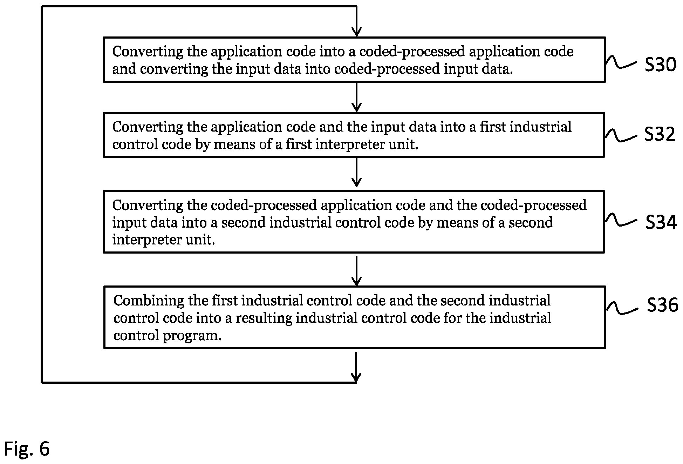

Fig. 6 is a simplified schematic flow diagram that shows such a sequential operation according to an embodiment.

In a first step S30, the application code and the input data are received and are converted into the coded-processed application code and into the coded-processed input data, respectively.

In a subsequent second step S32, the first interpreter unit (native interpreter unit) converts the application code and the input data into the first industrial control code, such as by reverting to the data processing unit 22 and/or the memory unit 24.

In a subsequent third step S34, the second interpreter unit (coded-processed interpreter unit) converts the coded-processed application code and the coded-processed input data into the second industrial control code, such as by reverting to the same data processing unit 22 and/or memory unit 24.

The order of the steps S32 and S34 could also be interchanged in other embodiments of the disclosure.

In a subsequent fourth step S36, the first industrial control code and the second industrial control code are combined into a resulting industrial control code for the industrial control program.

The process may subsequently return to the first step S30 for another round in a cyclic operation. In general, the process steps as illustrated in Fig. 6 may be repeated any number of times.

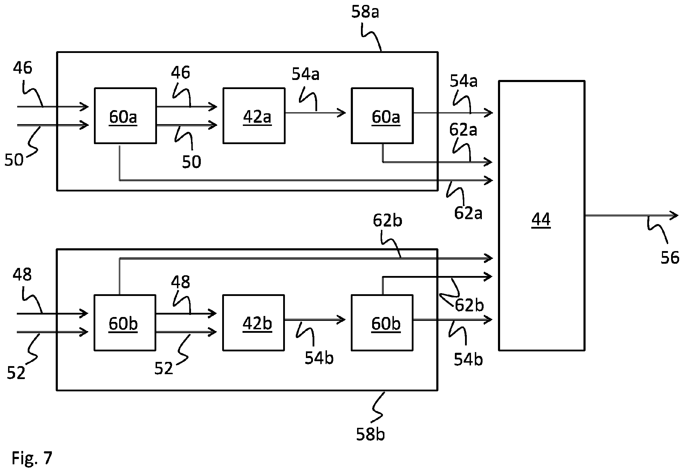

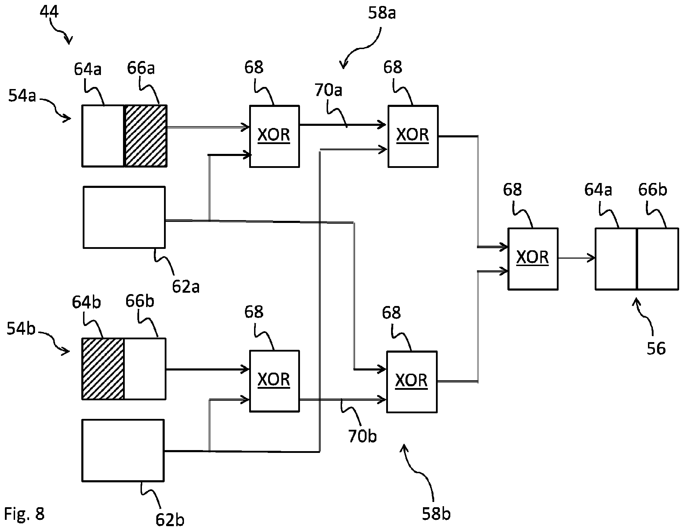

Validation techniques may be employed in the context of the present disclosure both in the native data processing channel 58a and in the coded-processed data processing channel 58b as well as in the combination unit 44 for improved data consistency and in order to identify and address data processing failures or memory failures, as will now be described in additional detail with reference to Figures 7 and 8. The validation techniques may comprise the use of checksums, such as cyclic redundancy checks (CRC).

Fig. 7 schematically illustrates the data processing in the native data processing channel 58a and the coded-processed data processing channel 58b using checksums. As shown in Fig. 7, the native data processing channel 58a may comprise a first checksum module 60a both upstream and downstream of the first interpreter unit 42a. Correspondingly, the coded-processed data processing channel 58b may comprise a second checksum module 60b both upstream and downstream of the second interpreter unit 42b.

The first checksum module 60a and the second checksum module 60b may be implemented on a common hardware, and may both revert to the data processing unit 22 and the data memory unit 24.

The first checksum module 60a may receive both the application code 46 and the input data 50 and may determine a first checksum 62a of the application code 46 and the input data 50. The first checksum module 60a may also compute a first checksum 62a for the first industrial control code 54a. Correspondingly, the second checksum module 60b may receive both the coded-processed application code 48 and the coded-processed input data 52 and may determine a second checksum 62b for the coded-processed application code 48 and the coded-processed input data 52. The second checksum module 60b may also compute a second checksum 62b for the second industrial control code 54b. The computation of the checksums 62a, 62b may involve both persistent data and updated input data, such as data fed back from the fieldbus 18.

The first checksum module 60a may provide the determined first checksums 62a and second checksums 62b to the combination unit 44 for comparison and/or validation. The combination unit 44 may be adapted to generate the resulting industrial control code 56 on the condition that the checksums coincide, and no failures have been detected.

Alternatively or additionally, a validation of the resulting industrial control code 56 may also take place in the industrial control network, such as in the fieldbus network 18.

In the context of the present disclosure, any checksum algorithm can be employed that has a sufficiently low residual failure probability consistent with the safety requirements of the specific industrial control application. For instance, the CRC 32 algorithm may guarantee a residual failure probability of at most

$$1 - \mathrm{DC}_{\mathrm{Checksum}} = 2^{-32} \qquad\qquad (2)$$

In some embodiments, the first industrial control code 54a associated with the native data processing channel 58a and the second industrial control code 54b associated with the coded-processed data processing channel 58b each provide only part of the resulting industrial control code 56, and the resulting industrial control code 56 comprises a combination of the first industrial control code 54a and the second industrial control code 54b. In general, the resulting industrial control code 56 may be a function of the first industrial control code 54a and the second industrial control code 54b. As an example, the combination unit 44 may at least partially merge the first industrial control code 54a and the second industrial control code 54b to generate the resulting industrial control code 56, such as by means of an XOR function. The combination unit 44 may also be adapted to validate the resulting industrial control code 56, such as by means of a cross comparison.

According to an embodiment, the first checksums 62a generated in the native data processing channel 58a and the second checksums 62b generated in the coded-processed data processing channel 58b may be coded on the output data. The combination unit 44 may then generate the resulting industrial control code 56 by combining checksums from both channels 58a, 58b and by merging the first industrial control code 54a with the second industrial control 54b.

An exemplary functionality of the combination unit 44 will now be described in additional detail with reference to Fig. 8.

The combination unit 44 receives the first industrial control code 54a together with the first checksums 62a from the native data processing channel 58a, as described above with reference to Fig. 7. The first industrial control code 54a may comprise both first header data 64a and first payload data 66a. The first header data 64a may comprise routing instructions that allow the industrial control network, such as the fieldbus network 18, to route the first payload data 66a to the controlled machinery, such as the gantry crane 12.

Similarly, the combination unit 44 receives the second industrial control code 54b together with the second checksums 62b from the coded-processed data processing channel 58b, as again described above with reference to Fig. 7. The second industrial control code 54b may comprise both second header data 64b and second payload data 66b. The second header data 64b may comprise routing instructions that allow the industrial control network such as the fieldbus network 18, to route the second payload data 66b to the controlled machinery, such as the gantry crane 12.

As can be further taken from Fig. 8, the combination unit 44 comprises an XOR module 68 that combines the first industrial control code 54a and the first checksums 62a by means of an XOR function to yield a first XOR output code 70a pertaining to the native data processing channel 58a. Correspondingly, the XOR module 68 combines the second industrial control code 54b and the second checksums 62b by means of an XOR function to yield a second XOR output code 70b pertaining to the coded-processed data processing channel 58b.

The resulting first XOR output code 70a is then XORed crosswise with the second checksums 62b by means of the XOR module 68. Correspondingly, the resulting second XOR output code 70b is XORed crosswise with the first checksums 62a by means of the XOR module 68. The resulting outputs are then again XORed by means of the XOR module 68 to yield the resulting industrial control code 56 that comprises the first header data 64a and the second payload data 66b. The resulting industrial control code 56 may then be sent to the controlled machinery, such as the gantry crane 12, via the industrial control network 18.

In the context of safety applications, in order to assess the reliability of the industrial controller system 16, 16', 16" it may be desirable to assess the Probability of Failure per Hour (PFH). Conventional techniques involve a Failure Modes Effects and Diagnostic Analysis (FMEDA), in which the specific hardware and software modules of the industrial controller system 16, 16', 16" and their failure rates are assessed, and are combined into a resulting PFH.

Software-coded processing techniques may simplify the assessment of the PFH. According to the present disclosure, the industrial controller system 16, 16', 16" takes the application code as an input variable. As a result, the PFH may be assessed independently of the application code and based only on basic hardware parameters, without any further underlying assumptions.

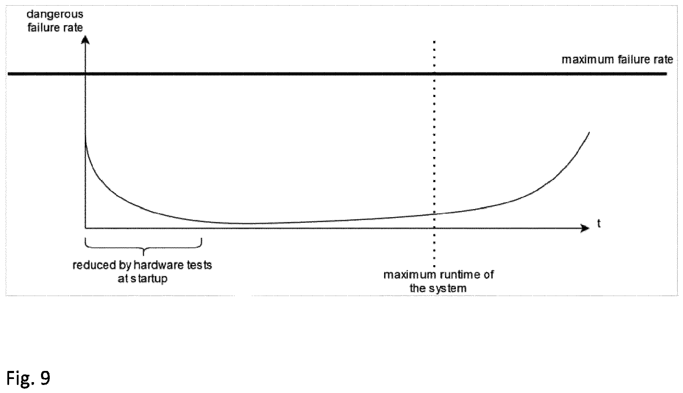

In safety control environments, the estimation of the expected failure rate should advantageously be considered in relation to the current runtime of the system. A classic example is the "bathtub curve" as schematically illustrated in Fig. 9, which expresses the expected failure rate of the components as a function of runtime t. It is an underlying assumption that the probability of failure is higher at the start and after a certain running time than in between. In order to minimize the failure potential at startup, hardware startup tests are usually carried out. The expected failure rate should stay below the maximum acceptable failure rate at all times, which may require a system shutdown at some maximum runtime.

If the hardware and software environment on which the safety function is executed is unevaluated, a spontaneously high failure accumulation may occur at any time. Therefore, these failures should advantageously also be detected with a very high failure detection probability at all times.

In the context of the present disclosure, in order to eliminate the dependency on a specific hardware and the failure rates of this hardware, a failure rate may be assumed which depends exclusively on the clock frequency of the processor and/or memory bus. Since an error can usually only have an effect within a processor clock frequency or a data bus clock frequency, we may assume the maximum clock rate of these two systems as the failure rate. The only requirement for the hardware is that it should not exceed a certain clock frequency. The diagnostic coverage on the data should then be high enough to achieve the desired SIL level.

As an example, consider the calculation of a PFH under the assumption of a maximum clock frequency f = 4 GHz and the use of a CRC32 checksum algorithm with a residual failure probability according to Eq. (2):

$$f = \text{MAX}(\text{processor clock frequency, data bus clock frequency}) \qquad (3)$$

$$f = 4\text{ GHz} \qquad (4)$$

$$1\text{-DC}_{Checksum} = 2^{-32} = 2.3283 * 10^{-10} \qquad (5)$$

$$1\text{-DC}_{CodedProcessing} = 5.9605 * 10^{-08} \qquad (6)$$

$$\text{PFH} = f * (1\text{-DC}_{CodedProcessing}) * (1\text{-DC}_{Checksum}) = 4\text{ GHz} * 2.3283 * 10^{-10} * 5.9605 * 10^{-08} = 4{,}000{,}000{,}000 * 2.3283 * 10^{-10} * 5.9605 * 10^{-08} / s = 4{,}000{,}000{,}000 * 3.600 * 2.2383 * 10^{-10} * 5.9605 * 10^{-08} / h = 2 * 10^{-4} / h \qquad (7)$$

A PFH below $10^{-3}$ is already sufficient for safety functions with low-demand requirements for SIL3. To achieve higher SIL levels or to implement safety functions with high-demand requirements, the bit widths of the checksums and coding may be increased or additional diagnostics may be used. In general, the use of diagnostics for data consistency, as well as coded processing in combination, may be able to fulfill these requirements for systems up to a SIL level of SIL3 or even higher.

The description of the embodiments and the Figures merely serve to illustrate the techniques of the present disclosure and some advantages associated therewith, but should not be misunderstood to imply any limitation. The scope of the disclosure is to be determined from the appended claims.

Reference signs

| 10 | industrial control environment |
| 12 | gantry crane |
| 14 | movable hook assembly |
| 16, 16', 16" | industrial controller system |
| 18 | control line, industrial control network, fieldbus |
| 20 | industrial controller unit |
| 22 | data processing unit |
| 24 | data memory unit |

| 26 | communication interface of industrial controller system 16 |
| 28 | programming system |
| 30 | network |
| 32 | programming interface |
| 34 | programming memory unit |
| 36 | programming processor unit |
| 38 | communication interface of programming system 28 |
| 40 | encoder unit |
| 40a | first encoder unit |
| 40b | second encoder unit |
| 42a | first interpreter unit |
| 42b | second interpreter unit |
| 44 | combination unit |
| 46 | application code |
| 48 | coded-processed application code |
| 50 | input data |
| 52 | coded-processed input data |
| 54a | first industrial control code |
| 54b | second industrial control code |
| 56 | resulting industrial control code |
| 58a | native data processing channel |
| 58b | coded-processed data processing channel |
| 60a | first checksum module |
| 60b | second checksum module |
| 62a | first checksums |
| 62b | second checksums |
| 64a | first header data |
| 64b | second header data |
| 66a | first payload data |
| 66b | second payload data |
| 68 | XOR module |
| 70a | first XOR output code |
| 70b | second XOR output code |

**Claims**

1. An industrial controller system (16, 16', 16"), comprising:

   an encoder unit (40; 40a, 40b) adapted to receive an application code (46) of an industrial control program and to convert the application code (46) into a coded-processed application code (48);
   wherein the encoder unit (40; 40a, 40b) is further adapted to receive input data (50) for the industrial control program and to convert the input data (50) into coded-processed input data (52);
   a first interpreter unit (42a) adapted to receive the application code (46) and the input data (50) and to convert the application code (46) and the input data (50) into a first industrial control code (54a);
   a second interpreter unit (42b) adapted to receive the coded-processed application code (48) and the coded-processed input data (52) and to convert the coded-processed application code (48) and the coded-processed input data (52) into a second industrial control code (54b); and
   a combination unit (44) adapted to combine the first industrial control code (54a) and the second industrial control code (54b) into a resulting industrial control code (56) for the industrial control program.

2. The industrial controller system (16, 16', 16") according to claim 1, wherein the first interpreter unit (42a) is adapted to convert the application code (46) and the input data (50) into the first industrial control code (54a) at a runtime of the industrial control program, and/or wherein the second interpreter unit (42b) is adapted to convert the coded-processed application code (48) and the coded-processed input data (52) into the second industrial control code (54b) at a runtime of the industrial control program.

3. The industrial controller system (16, 16', 16") according to claim 1 or 2, wherein the application code (46) comprises a high-level programming language or script language.

4.  The industrial controller system (16, 16', 16") according to any one of the preceding claims, wherein the first industrial control code (54a) and/or the second industrial control code (54b) comprises a machine code.

5.  The industrial controller system (16, 16', 16") according to any one of the preceding claims, wherein the combination unit (44) is adapted to output the resulting industrial control code (56) to an industrial control network (18), in particular a fieldbus network (18).

6.  The industrial controller system (16, 16', 16") according to any one of the preceding claims, wherein the combination unit (44) is adapted to validate the first industrial control code (54a) and/or the second industrial control code (54b), in particular to validate a checksum associated with the first industrial control code (54a) and/or the second industrial control code (54b).

7.  The industrial controller system (16, 16', 16") according to any one of the preceding claims, wherein the encoder unit (40; 40a, 40b) is adapted to receive the input data (50) from an industrial control network (18), in particular a fieldbus network (18).

8.  A method of operating an industrial controller system (16, 16', 16"), comprising:

    receiving an application code (46) of an industrial control program;
    receiving input data (50) for the industrial control program;
    converting the application code (46) into a coded-processed application code (48);
    converting the input data (50) into coded-processed input data (52);
    converting the application code (46) and the input data (52) into a first industrial control code (54a) by means of a first interpreter unit (42a);
    converting the coded-processed application code (48) and the coded-processed input data (52) into a second industrial control code (54b) by means of a second interpreter unit (42b); and combining the first industrial control code (54a) and the second industrial control code (54b) into a resulting industrial control code (56) for the industrial control program.

9.  The method according to claim 8, wherein the application code (46) and the input data (50) are converted into the first industrial control code (54a), and the coded-processed application code (48) and the coded-processed input data (52) are converted into the second industrial control code (54b) sequentially and/or cyclically.

10. The method according to claim 8 or 9, further comprising outputting the resulting industrial control code (56) to an industrial control network (18), in particular a fieldbus network (18).

11. The method according to any one of the claims 8 to 10, further comprising validating the first industrial control code (54a) and/or the second industrial control code (54b), in particular validating a checksum associated with the first industrial control code (54a) and/or the second industrial control code (54b).

12. The method according to any one of the claims 8 to 11, wherein the input data (50) for the industrial control program is received from an industrial control network (18), in particular a fieldbus network (18).

13. The method according to any one of the claims 8 to 12, further comprising assessing a probability of a failure of running the industrial control program in terms of a processor clock frequency of the industrial controller system (16, 16', 16") and/or in terms of a data bus clock frequency of a data bus (18) communicatively coupled to the industrial controller system (16, 16', 16").

14. The method according to any one of the claims 8 to 13, further comprising assessing a probability of a failure of running the industrial control program only in terms of a processor clock frequency of the industrial controller system (16, 16', 16") and/or in terms of a data bus clock frequency of a data bus (18) communicatively coupled to the industrial controller system (16, 16', 16").

15. A computer program or computer program product comprising computer-readable instructions, such that the instructions, when run on an industrial controller system (16, 16', 16"), in particular the industrial controller system (16, 16', 16") according to any one of the claims 1 to 7, implement on the industrial controller system (16, 16', 16") a method according to any one of the claims 8 to 14.

Fig. 1

Fig. 2

Fig. 3

Fig. 4

| Receiving an application code of an industrial control program. | $\sim$ S10 |
| --- | --- |

$\downarrow$

| Receiving input data for the industrial control program. | $\sim$ S12 |
| --- | --- |

$\downarrow$

| Converting the application code into a coded-processed application code. | $\sim$ S14 |
| --- | --- |

$\downarrow$

| Converting the input data into coded-processed input data. | $\sim$ S16 |
| --- | --- |

$\downarrow$

| Converting the application code and the input data into a first industrial control code by means of a first interpreter unit. | $\sim$ S18 |
| --- | --- |

$\downarrow$

| Converting the coded-processed application code and the coded-processed input data into a second industrial control code by means of a second interpreter unit. | $\sim$ S20 |
| --- | --- |

$\downarrow$

| Combining the first industrial control code and the second industrial control code into a resulting industrial control code for the industrial control program. | $\sim$ S22 |
| --- | --- |

Fig. 5

| Converting the application code into a coded-processed application code and converting the input data into coded-processed input data. | S30 |

| Converting the application code and the input data into a first industrial control code by means of a first interpreter unit. | S32 |

| Converting the coded-processed application code and the coded-processed input data into a second industrial control code by means of a second interpreter unit. | S34 |

| Combining the first industrial control code and the second industrial control code into a resulting industrial control code for the industrial control program. | S36 |

Fig. 6

Fig. 7

Fig. 8

Fig. 9

Europäisches
Patentamt

European
Patent Office

Office européen
des brevets

# EUROPEAN SEARCH REPORT

**Application Number**

EP 24 16 8392

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/163182 A1 (BREAULT RICHARD E [US]) 3 July 2008 (2008-07-03) * paragraphs [0002] - [0016], [0026] - [0051]; figures 1,2,6 * | 1-15 | INV. G05B9/02 G06F11/14 |
| X | Süßkraut Martin ET AL: "Hardware-independent safety solutions with SIListra Systems and innotec", , 1 January 2024 (2024-01-01), pages 1-4, XP093206314, Retrieved from the Internet: URL:https://www.silistra-systems.com/docum ents/Tech-Report%20-%20Hardware%20independ ent%20safety%20solutions%20with%20SIListra %20Systems%20and%20innotec.pdf [retrieved on 2024-09-18] * page 1 - page 4 * | 1-15 | |

**TECHNICAL FIELDS SEARCHED (IPC)**

G05B
G06F

The present search report has been drawn up for all claims

| Place of search | Date of completion of the search | Examiner |
|---|---|---|
| Munich | 23 September 2024 | Barriuso Poy, Alex |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 8392

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2024

| Patent document cited in search report | Publication date | Patent family member(s) | Publication date |
|---|---|---|---|
| US 2008163182 A1 | 03-07-2008 | US 2005193378 A1 | 01-09-2005 |
| | | US 2008163182 A1 | 03-07-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130262938 A1

- EP 4242847 A2

**Non-patent literature cited in the description**

- Software Encoded Processing: Dependable Systems with Commodity Hardware. **U. WAPPLER** ; **C. FETZER**. Lecture Notes in Computer Sciences. Springer, 2007, vol. 4680, 356-369